Europäisches Patentamt

European Patent Office

Office européen des brevets

(11) Numéro de publication: **0 282 400 B1**

# FASCICULE DE BREVET EUROPEEN

(45) Date de publication de fascicule du brevet: **20.05.92**   (51) Int. Cl.⁵: **G01G 21/28**, G01G 19/413

(21) Numéro de dépôt: **88400486.2**

(22) Date de dépôt: **02.03.88**

(54) **Dispositif de pesée grand public.**

(30) Priorité: **09.03.87 FR 8703294**
**10.04.87 FR 8705401**

(43) Date de publication de la demande:
**14.09.88 Bulletin 88/37**

(45) Mention de la délivrance du brevet:
**20.05.92 Bulletin 92/21**

(84) Etats contractants désignés:
**BE DE ES GB IT NL**

(56) Documents cités:
**EP-A- 0 087 310**
**DE-A- 1 461 945**
**FR-A- 2 577 041**
**GB-A- 2 109 567**

**PATENT ABSTRACTS OF JAPAN, vol. 9, no. 9 (P-327)[1732], 16 janvier 1985; & JP-A-59 159 024 (SHIMAZU SEISAKUSHO K.K.) 08-09-184**

(73) Titulaire: **Mathian, Louis**
**Rue de la Maritelle Bresson**
**F-38320 Eybens(FR)**

(72) Inventeur: **Mathian, Louis**
**Rue de la Maritelle Bresson**
**F-38320 Eybens(FR)**

Rank Xerox (UK) Business Services
(3.08/2.19/2.0)

**Description**

L'invention est relative à un dispositif de pesée grand public selon le préambule de la revendication 1.

Le document EP-A-0.087.310 décrit un dispositif du genre mentionné; destiné à des magasins self service, où la vente des produits en vrac pose un sérieux problème de pesée et de calcul du prix des marchandises. Ce travail est généralement confié à la caissière, mais il nécessite un équipement spécial de chaque caisse difficilement concevable dans les hypermarchés qui préfèrent disposer une balance à proximité du rayon des produits en vrac et affecter un employé spécialement à cette tâche.

Le dispositif connu permet une pesée par le client et il comporte un moyen de fermeture et d'étiquetage du sachet pour éviter des fraudes. Au plateau de la balance est fixée une potence portant un système de préhension du sachet et après la pesée une étiquette, sur laquelle ont été imprimées au préalable, les données de la pesée, est fixées automatiquement autour du col du sachet pour fermer le sachet. Le dispositif est compliqué et il comporte des éléments mobiles portés par le plateau de la balance et des éléments fixes à proximité et au niveau du fond du sachet. Lors de la mise en place du sachet, l'acheteur peut facilement freiner ou bloquer le déplacement des éléments mobiles et fausser ainsi l'opération de pesée, par exemple en insérant une cale appropriée ou une partie du sachet entre les éléments fixe et mobile. Ce vice redhibitoire du dispositif connu explique la non-exploitation de ce dispositif.

La présente invention a pour but de remédier à ces inconvénients et de permettre la réalisation d'un dispositif de pesée du genre self-service limitant les risques de fraude, et ce but est atteint par la mise en oeuvre des particularités mentionnées dans les revendications.

En disposant l'ensemble de la balance dans la partie haute de l'enceinte, les parties mobiles accessibles à l'acheteur sont toujours éloignées des parties fixes, en l'occurrence des parois de l'enceinte. En ne mettant à la disposition de l'acheteur que des sachets de taille appropriée ou par tout autre moyen, on peut éviter toute possibilité de freinage du déplacement du sachet ou des parties mobiles.

La pesée est avantageusement effectuée en position fermée d'un capot de fermeture de l'enceinte, et le paquet posé sur la balance est alors inaccessible. La manoeuvre de fermeture du capot peut déclencher la pesée et cette manoeuvre est quasiinstinctive. Le capot et le dispositif de déclenchement ou d'enregistrement de la pesée sont bien entendu adaptés au type de balance et à son encombrement.

Le dispositif de pesée selon l'invention peut également comporter un moyen de fermeture du sachet agencé pour empêcher l'introduction dans le sachet de marchandise additionnelle après l'opération de pesage.

Le cycle de pesage comprend une fermeture du sachet empêchant une introduction postérieure au pesage de marchandise dans le sachet. L'acheteur introduit le sachet contenant la marchandise dans un système de préhension ayant des machoires de serrage et de fermeture du col du sachet. Simultanément et/ou postérieurement à cette fermeture un moyen de scellement, par exemple une bande autocollante, soudée ou agrafée est mise en place pour empêcher toute ouverture ultérieure du sachet. Le système de préhension est disposé au dessous du plateau de la balance et après l'opération de scellement, il suffit d'ouvrir les mâchoires de serrage pour que le sachet tombe. Toutes ces opérations sont automatiques et par example coordonnées avec la fermeture du capot de protection pour éviter toute intervention frauduleuse de l'acheteur. Selon un développement de l'invention, des repères sont apposés à la fois sur le sachet et sur l'étiquette émise lors de la pesée pour éviter tout échange ou collage d'une mauvaise étiquette sur le sachet. Le repérage du sachet peut être réalisé par des repères figurant sur la bande de scellement, ces repères étant apposés au moment de la fermeture du sachet ou dans le cas d'une alimentation en continue des bandes de scellement, lors de la manoeuvre d'amenée de la bande. Le capot ne peut être ouvert qu'après l'opération de pesage et l'acheteur ne peut reprendre le sachet qu'à ce moment là. Le dispositif de fermeture et de scellement du sachet selon l'invention peut facilement être adjoint à une balance existante mais un tel système peut être intégré à la fabrication de la balance. La bande de scellement peut dans ce cas être constituée par l'étiquette de pesage et il est possible d'automatiser et de piloter toutes les opérations par un automate quelconque.

Le système de préhension est fixé sous le plateau de la balance, le sachet restant enserré entre les mâchoires jusqu'à la fin des opérations de pesage, de scellement et de fixation de l'étiquette, dont l'ordre de succession peut être différent.

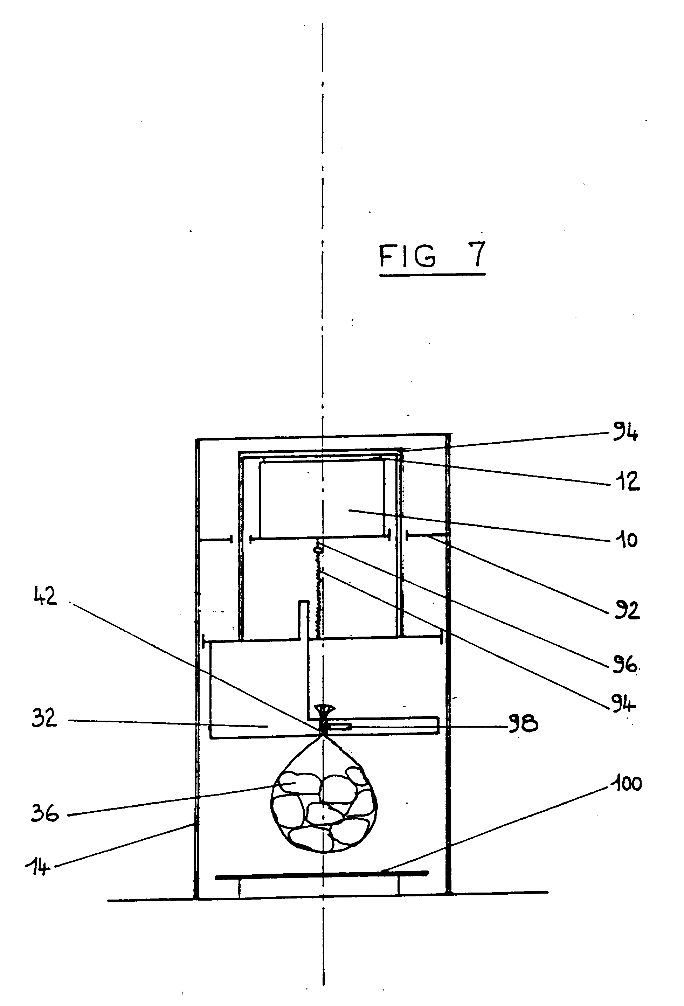

D'autres avantages et caractéristiques ressortiront plus clairement de la description qui va suivre d'un mode de mise en oeuvre de l'invention donné à titre d'exemple non limitatif et représenté aux dessins annexés (dont seulement le dispositif de persée selon la figure 7 est revendiqué.) dans lesquels:

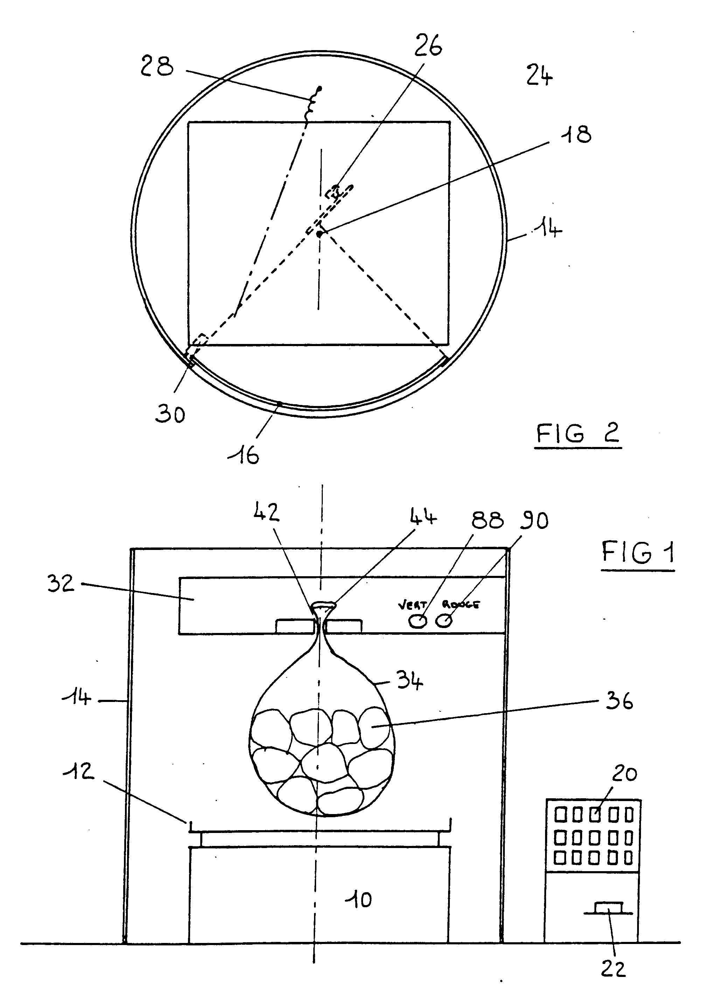

- le figure 1 est une vue schématique en élévation d'un dispositif de pesée, le capot étant supposé ouvert;
- la figure 2 est une vue en plan du dispositif de pesée avec le capot représenté en position fermé;
- la figure 3 est une vue de détail à échelle agrandie de la figure 1 montrant le dispositif de fermeture du sachet;
- la figure 4 est une vue en plan du dispositif représenté à la figure 3;
- la figure 5 illustre une bande de scellement du sachet;
- la figure 6 est une vue analogue à celle de la figure 5 montrant l'étiquette de pesage fixée sur la bande de scellement.
- La figure 7 est une vue du système de pesée selon l'invention dans lequel le système de préhension, soudage, étiquetage est suspendu au-dessous de la balance.
- la figure 8 est une vue schématique en perspective d'une variante de réalisation.
- la figure 9 est une coupe transversale du dispositif selon la figure 8.

Sur les figures, une balance 10 comporte un plateau 12 destiné à recevoir les marchandises à peser. La balance 10 avec son plateau 12 est disposée à l'intérieur d'une enceinte cylindrique 14 ayant un capot 16 en forme de secteur susceptible de pivoter autour d'un axe 18 pour occuper sélectivement une position de fermeture représentée à la figure 2 et une position d'ouverture par pivotement dans le sens des aiguilles d'une montre sur la figure 2. Le clavier de commande 20 de la balance 10 est disposé à l'extérieur de l'enceinte cylindrique 14 et ce clavier pilote l'ensemble des opérations de pesage et émet une étiquette 22 de pesée. En position fermé du capot 16, un bras 24 actionne un micro-contact 26 d'autorisation d'une opération de pesage. Un ressort de rappel 28 sollicite le capot 16 en position d'ouverture et un verrou 30 à commande électromagnétique retient le capot 16 en position de fermeture à l'encontre de la force de rappel du ressort 28. Le verrou 30 est piloté par le clavier 20 de manière à autoriser une ouverture du capot 16 qu'après exécution de la pesée.

Au-dessus du plateau 12 est disposé un système de préhension 32 fixé rigidement à l'enceinte cylindrique 14. L'écartement entre le plateau 12 et le système de préhension 32 est suffisant pour l'introduction d'un sachet 34 contenant la marchandise à peser 36 sans risque de contact du sachet 34 et du plateau 12. En se reférant plus particulièrement aux figures 3 et 4, on voit que le système de préhension 32 comporte deux mâchoires 38,40 définissant en position ouvert, une fente 42 d'insertion du col 44 du sachet 34. Chaque mâchoire 38,40 est agencée en coulisseau 46,48 autorisant un mouvement de rapprochement et d'écartement des mâchoires 38,40, ces mouvements étant pilotés par des genouillères 50,52, actionnés par des électro-aimants 54,56.

Les électro-aimants 54,56 sont pilotés par un contact 58, disposés dans la fente 42 de manière à être actionné lors de l'insertion du sachet 34. L'actionnement du contact 58 provoque le déplacement des genouillères 50,52 en position d'extension amenant les mâchoires 38,40 en position de serrage du col 44 du sachet 34. Dans cette position de serrage, le sachet 34 est maintenu par le système de préhension 32 et l'opérateur peut lâcher le sachet 34. L'ouverture des mâchoires 38,40 est pilotée par les électro-aimants 54,56, notamment par désexcitation de ceux-ci et par rappel des genouillères 50,52 en position fléchie, représentée à la figure 4 par des ressorts de rappel 60,62.

Au système de préhension 32 est associé un dispositif d'amenée de bandes 64,66, stockées sur des bobines 68,70 et guidées par des galets 72 dont certains sont moteurs. Les bandes 64,66 sont guidées par leurs bords dans des glissières 74 permettant l'introduction de ces bandes 64,66 entre les mâchoires ouvertes 38,40. Les bandes 64,66 s'étendent sur les bords de la fente 42 de manière à encadrer le col 44 du sachet 34 lors de l'insertion de ce dernier dans la fente 42. Du côté opposé à l'entrée de la fente 42 est disposé un couteau de sectionnement 76 intercalé entre les deux bandes 64,66, de manière à couper les deux bandes 64,66 lors d'un mouvement de rapprochement et de serrage des mâchoires 38,40. Les deux extrémités sectionnées des bandes 64,66 entourent ainsi en position de serrage des mâchoires 38,40, le collet 44 et elles peuvent sceller le sachet 34 par simple fixation de l'une à l'autre et éventuellement au sachet 34. Cette fixation peut être réalisée par autocollage si les bandes 64,66 sont du type autocollantes, soit par tout autre moyen approprié par exemple, par agrafage mécanique de la manière schématiquement représentée sur les figures 3 et 4. Le système d'agrafage est incorporé à la mâchoire 38 et comporte trois glissières 78 de guidage des agrafes 80, actionnées par un percuteur 82. Le percuteur 82 est lui-même actionné par un électro-aimant 84 poussant les agrafes 80 dans la position d'agrafage des extrémités des bandes 64,66. De tels systèmes d'agrafage sont bien connus des spécialistes et pourraient être réalisés d'une manière différente, par exemple par soudage, le percuteur étant remplacé par des doigts de chauffage du plastique.

Les bandes 64,66 défilent entre un tampon-compteur 86 susceptible d'imprimer sur ces bandes un repère, en l'occurrence un nombre à chaque manoeuvre d'amenée des bandes. Le dispositif de repèrage est coordonné avec l'impression de l'étiquette de pesée 22 qui porte le même repère ou même nombre pour surveiller la concordance entre l'objet pesé et l'étiquette de pesée.

Le dispositif de pesée selon l'invention fonctionne de la manière suivante:

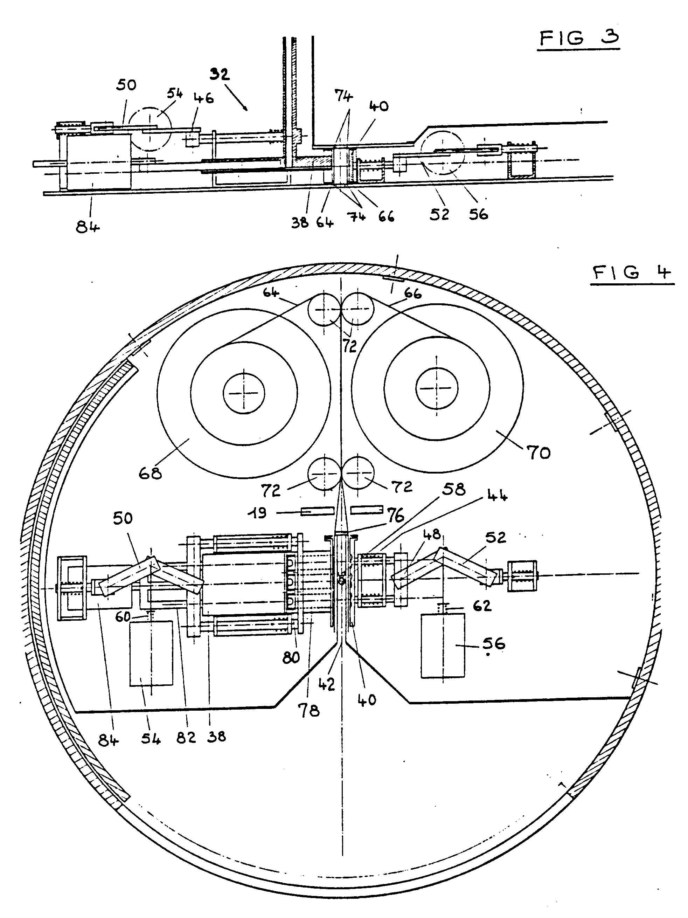

Lorsque le client se présente devant le dispositif de pesée, le capot 16 est ouvert et, un voyant 88 de couleur verte indique lorsqu'il est éclairé, que le dispositif de pesée est prêt à fonctionner. Le client ou acheteur place son sachet 34 rempli de marchandise 36 dans la fente 42 et en poussant ce sachet vers le fond de la fente 42, il actionne le contact 58. L'action du contact 58 provoque l'alimentation des électro-aimants 54,56 et le déplacement des genouillères 50,52 en position d'extension voisine de la position de point mort pour fermer les mâchoires 38,40. Le col 44 du sachet 34 est enserré entre les mâchoires 38,40 avec interposition des extrémités des bandes 64,66 qui ont été sectionnées par le couteau 76 au cours du mouvement de rapprochement des mâchoires 38,40. Le voyant 88 s'éteint et un voyant 90 peut éventuellement s'allumer pour signaler le début du cycle de pesée. L'alimentation de l'électro-aimant 84, par exemple due à une temporisation ou par la détection de la venue en position de serrage des mâchoires 38,40 provoque l'agrafage par les trois agrafes 80 des bandes 64,66 sur le collet du sachet 34. Cet agrafage constitue un scellement du sachet 34 empêchant toute introduction ultérieure de marchandise à l'intérieur du sachet. Ces bandes ou étiquettes avaient auparavant reçu l'impression d'un repère par le dispositif 86 de la manière indiquée sur la figure 5 pour identifier le sachet en cours de pesage. Le sachet 34 reste emprisonné entre les mâchoires fermées 38,40 empêchant tout retrait du sachet 34 par l'acheteur.

Le cycle de pesage est déclenché par la fermeture du capot 16 qui actionne le contact 26. La fermeture de ce contact 26 désexcite les électro-aimants 54,56 autorisant une brisure des genouillères 50,52 et une ouverture des mâchoires 38,40. Le sachet 34 est ainsi libéré et il tombe sur le plateau 12 de la balance 10. La hauteur de chute doit être relativement faible mais il est important que le sachet 34 soit entièrement dégagé du système de préhension 32, afin de ne pas fausser la pesée. L'acheteur peut alors introduire par le clavier 20 les paramètres de pesée, en particulier le type de marchandise et déclencher la pesée et l'émission d'une étiquette 22. Selon le type de balance 10, les paramètres peuvent être introduits au préalable, et la pesée est déclenchée automatiquement dès la libération du sachet 34. Pendant toutes ces opérations, le capot 16 est verrouillé en position fermé par le verrou 30 et toute intervention sur le plateau ou sur le sachet 34 est impossible.

L'electro-aimant du verrou 30, est actionné après édition de l'étiquette 22 qui correspond à la fin de l'opération de pesage et le capot 16 s'ouvre automatiquement pour permettre le retrait du sachet 34 par l'acheteur. Celui-ci colle l'étiquette 22 sur les bandes 64,66 de scellement du sachet 34. Cette étiquette 22 reçoit lors de son impression un repère en l'occurrence un nombre identique à celui apposé par le tampon d'impression 86 permettant un contrôle de la parfaite correspondance de l'objet pesé et de l'étiquette de pesage.

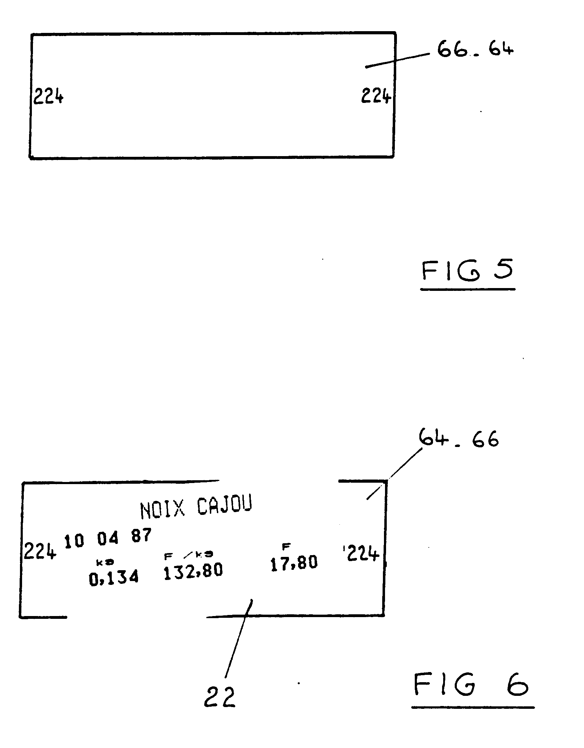

En se reférant plus particulièrement aux figures 5 et 6, on voit que la disposition des nombres repères et la dimension de l'étiquette de pesée 22 sont choisies de manière à ce que au moins, l'un de ces repères soit toujours visible. Lors d'un contrôle il est donc inutile de décoller l'étiquette 22, et toute fraude est pratiquement éliminée. L'acheteur ne peut plus frauder sur le poids, car il ne peut agir, ni sur le plateau de la balance, ni sur le sachet au cours de la pesée. Il ne peut rajouter de produit après pesage de celui-ci, le paquet étant scellé par les bandes 64,66. L'étiquette 22 collée sur le sachet 34 doit porter les mêmes repères que ce dernier et, toute apposition d'une fausse étiquette est facilement détectée.

Avant déclenchement d'une nouvelle pesée, les bandes 64,66 sont avancées par les galets moteurs 72 de manière à les amener entre les mâchoires 38,40. Le voyant rouge 90 s'éteint et le voyant vert 88 s'allume.

Il est facile de voir que ce dispositif de préhension et de scellement du sachet 34 ainsi que l'enveloppe 14 peuvent être facilement adjoints aux balances existantes, les seules modifications étant des connexions électriques actionnant les séquences successives du cycle. L'ensemble du cycle peut bien entendu être piloté par un programmateur ou par tout automate approprié.

Le système de scellement peut bien entendu être intégré à la balance lors de la fabrication, ce qui permet une simplification notable. Le système de préhension 32 peut dans ce cas constituer le plateau ou la partie mobile de la balance, l'opération de pesage étant dans ce cas réalisée pendant que le sachet 34 est maintenu par les machoires fermées 38,40. Il est également possible d'amener dans ce cas l'étiquette de pesée 22 sur le sachet 34 et de l'agrafer ou de la fixer sur ce sachet 34 avant que l'acheteur n'y ait accès. On évite ainsi l'utilisation des bandes 64,66 ou inversement, l'édition d'une étiquette de pesée 22 lorsque l'impression des données de pesée est effectuée directement sur les bandes 64,66 réalisant le scellement du sachet 34. D'autres combinaisons sont bien entendu réalisables et on ne sortira pas du cadre de l'invention en modifiant le système de préhension ou en modifiant le cycle des opérations, seule la mise hors de portée de l'acheteur du sachet pendant les opérations de pesage et de repérage étant fondamentale pour la mise en oeuvre de l'invention.

Une autre réalisation possible est représentée par la figure 7. Dans ce cas, la balance 10 est placée dans la partie haute de l'enceinte cylindrique 14 , sur un support 92 fixé à l'enceinte. Par l'intermédiaire du support 94 , le système de préhension 32 est placé au dessous de la balance 10 , tout en appuyant sur le plateau 12 . Un ressort d'équilibrage 94 , équipé d'un système de réglage 96 et fixé au support 94 permet d'équilibrer parfaitement le poids du système de préhension. En l'absence du sachet 36 , la balance indique un poids nul. Lorsqu'un paquet 36 est pris par le système de préhension 32 , la balance mesure précisément le poids du paquet. Après fermeture du capot 16 , la mesure est réalisée et l'imprimante 98 indique les informations de prix, poids, nom du produit, etc... sur les bandes 66 quand l'opérateur appuie sur le bouton de sélection du produit. Ensuite, le sachet 36 est laché par le système de préhension et tombe sur le tapis amortisseur 100 . Le capot 16 s'ouvre et l'opérateur peut reprendre son sachet fermé et étiqueté.

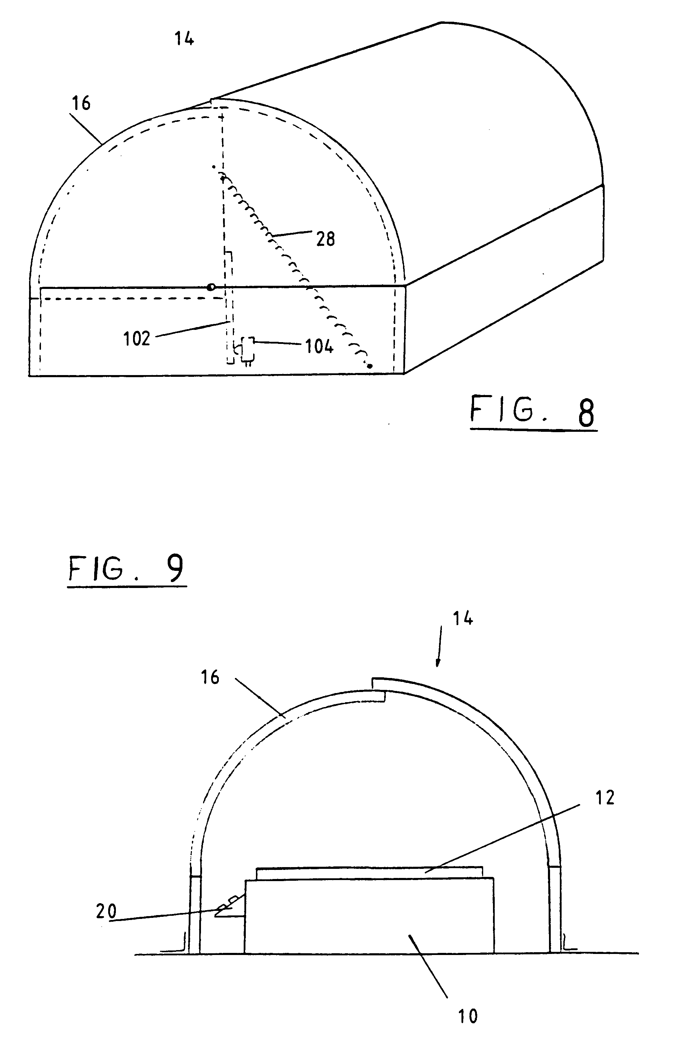

En se référant aux figures 8 et 9 on voit un dispositif simplifié dans lequel la balance 10 est posée sur un support notamment une table.

La balance 10 est une balance électrique ou électronique effectuant automatiquement le calcul du prix de la marchandise et éditant une étiquette pouvant être utilisée pour clore le paquet pesé. De telles balances ont un clavier de commande 20 permettant d'afficher le prix au kilo ou dans une version plus élaborée le type de produit pesé (par exemple des oranges ou des pommes de terre), la balance comportant une mémoire d'enregistrement du prix de chaque produit du rayon. Le clavier comporte également une touche de déclenchement de l'opération de pesée et/ou d'édition de l'étiquette. Un dispositif d'affichage du poids et/ou du prix permet un contrôle par l'opérateur.

L'enceinte en forme de cloche demi-cylindrique 14 est disposée sur la table de manière à coiffer la balance 10. Le capot 16 constitué d'un quart de cylindre, est monté à pivotement autour de l'axe du cylindre pour venir en position ouvert se rabattre sur la partie fixe. Un ressort 28 sollicite la partie mobile en position ouvert dégageant l'accès au plateau 12 de la balance 10. A la partie mobile 16 est fixée une tige 102 d'actionnement d'un contact électrique 104 lorsque cette partie mobile 26 vient en position fermé représentée sur les figures. Le contact électrique peut par exemple être inséré dans le circuit d'alimentation du dispositif d'édition de l'étiquette de la balance 10, de manière à permettre l'édition d'une telle étiquette qu'en position fermé du capot. Ce contact électrique peut également être inséré dans le cordon d'alimentation de la balance 10 si les commandes d'enregistrement du type de marchandises sont mémorisées, de manière à provoquer la pesée et le calcul du prix au moment de la fermeture du capot.

Le fonctionnement est particulièrement simple:
- le capot 16 est normalement ouvert et l'acheteur peut placer son paquet sur le plateau 12 en l'introduisant par l'ouverture dégagée par la partie pivotante 16. L'acheteur enfonce les touches correspondant au type de marchandises et éventuellement de déclenchement de l'opération de pesage. Ces préparatifs étant achevés, l'acheteur rabat la partie mobile 16 dont la tige d'actionnement 102 actionne le contact électrique 104 lorsque le capot 16 vient en position fermée. C'est au moment de la fermeture de ce contact électrique, que l'opération de pesée et/ou d'édition de l'étiquette sont véritablement déclenchées. Ces opérations interviennent à un moment où la balance et les produits portés par le plateau 12 sont inaccessibles à l'opérateur.

Toute fraude par action manuelle sur le plateau 12 ou sur le sachet posé sur le plateau, est rendue impossible. Dès l'édition de l'étiquette et libération de la partie mobile 16, celle-ci revient en position ouvert sous l'action du ressort de rappel 28. L'acheteur peut reprendre le paquet pesé ainsi que l'étiquette qu'il fixe sur le paquet.

Il est clair que la forme du capot peut être absolument différente et comporter par exemple une fenêtre à guillotine donnant accès au plateau 12 ou être constituée par une simple cloche pouvant être enlevée et mise en place par l'opérateur, le détecteur de position ce ce capot ou de cette cloche étant bien entendu adapté à la conformation du capot.

Le clavier 20 peut bien entendu être disposé à l'extérieur de la cloche auquel cas toutes les opérations sont effectuées en position fermé du capot. On peut concevoir un système mécanique de verrouillage des touches 20 tant que le capot n'est pas fermé, la solution électrique à contact libérant les touches ou rendant possible la commande de déclenchement de la pesée ou d'enregistrement par édition d'une étiquette étant inhibée par ce contact en position ouvert du capot.

## Revendications

1. Dispositif de pesée grand public notamment de marchandises en vrac (36) mises en sachet (34) par l'acheteur comprenant un système de préhension (32) du sachet (36) ayant une fente (42), d'insertion par l'acheteur du col (44) du sachet, une balance (10) de support des marchandises à peser, un moyen de fermeture (64,66) du sachet agencé pour empêcher l'introduction dans le sachet de marchandises additionnelles après l'opération de pesée et un moyen d'impression (98) des informations commerciales, du poids ou du prix des marchandises pesées, caractérisé en ce que le système de préhension (32) du sachet (36) est disposé et fixé au-dessous de la balance (10), que ledit système de préhension (32) comporte une paire de mâchoires (38,40) venant enserrer le col (44) du sachet introduit dans ladite fente (42) pour maintenir et suspendre le sachet (36) à ladite balance (10), que lesdites mâchoires (38,40) comportent des moyens de scellement (64,66) du sachet dont le col (44) est enserré entre les mâchoires (38,40), par soudage et fixation d'une étiquette, et que l'ensemble est disposé dans la partie haute d'une enceinte (14) ayant une ouverture d'accès à la partie basse susceptible d'être fermée.

2. Dispositif de pesée selon la revendication 1, caractérisé en ce que lesdits moyens de scellement comportent deux bandes (64,66) chacune associée à l'une des mâchoires (38,40) et qu'un dispositif d'amenée (72) insère une bande de chaque côté du col (44) du sachet entre ce col et la mâchoire associée, en position ouverte, de façon que les bandes (64,66) sont appliquées contre le col (44) du sachet, et l'une contre l'autre lors du serrage des mâchoires (38,40) pour sceller le sachet et fixer les bandes (64,66) au col.

3. Dispositif de pesée selon la revendication 1 ou 2, caractérisé en ce qu'il comporte un dispositif d'impression (98) des données de pesée et que l'impression est réalisée sur les bandes de scellement (64,66) avant la libération du sachet (36) par le système de préhension (32).

4. Dispositif de pesée selon la revendication 1,2 ou 3, caractérisé en ce que les bandes de scellement (64,66) sont stockées sur des bobines (68,70), que le dispositif d'amenée (72) des bandes est couplé au mécanisme d'actionnement des mâchoires (38,40) pour approvisionner automatiquement les bandes de scellement et qu'un dispositif de sectionnement (76) coupe les bandes à chaque opération de pesée.

5. Dispositif de pesée selon la revendication 4, caractérisé en ce que le dispositif de sectionnement comporte un couteau (76) intercalé entre les deux bandes (64,66) du côté opposé à l'entrée de la fente (42) pour couper les deux bandes lors du mouvement de rapprochement et de serrage des mâchoires (38,40).

6. Dispositif de pesée selon l'une des revendications précédentes, caractérisé en ce que l'enceinte (14) comporte un capot (16) de fermeture de l'ouverture d'accès, dont la fermeture pilote les opérations de pesage et de scellement du sachet, qui sont entièrement automatiques.

7. Dispositif de pesée selon l'une quelconque des revendications précédentes, caractérisé en ce qu'il comporte un détecteur (58) de mise en place du sachet (34) dans la fente (42), lequel pilote la fermeture des mâchoires (38,40) pour enserrer le col du sachet.

**Claims**

1. Weighing device for the general public, especially for loose goods (34) placed by the customer in a bag (36), comprising holding means (32) of the bag (36) having a slot (42) wherein the neck (44) of the bag (36) is inserted by the customer, a balance (10) supporting the articles to be weight, bag sealing means (64, 66) deviced to prevent the introduction of further goods into the bag after the weighing operation and printing means (98) of commercial informations, of the weight or of the price of the weighed goods, characterized in that the bag (36) holding means (32) are disposed and secured under the balance (10), that said holding means (32) comprises a pair of jaws (38, 40) which clamp the neck (44) of the bag inserted in said slot (42) to maintain and suspend the bag (36) to said balance (10), that said jaws (38, 40) comprise sealing means (64, 66) of the bag, which neck (44) is clamped between the jaws (38, 40), by welding or securing of a label, and that the whole is located in the upper part of a case (14) having an opening for the access to the lower part, which may be closed.

2. Weighing device according to claim 1, characterized in that said sealing means comprise two tapes (64, 66), each associated to one of the jaws (38, 40) and that supply means (72) inserts a tape on each side of the neck (44) of the bag between this neck and the associated jaw in the open position, so that the tapes (64, 66) are applied to the neck (44) of the bag and one to the other when the jaws (38, 44) are closed to seal the bag and to secure the tapes (64, 66) to the neck.

3. Weighing device according to claim 1 or 2, characterized in that it comprises a printing device (98) of the weighing informations and that the printing is made on the sealing tapes (64, 66) before the holding means (32) releases the bag (36).

4. Weighing device according to claim 1, 2 or 3, characterized in that the sealing tapes (64, 66) are stocked on reels (68, 70), that the tape supply means (72) are coupled with the jaw (38, 40) actuating mechanism to supply automatically the sealing tapes and that cutting means (76) cut the tapes after each weighing operation.

5. Weighing device according to claim 4, characterized in that the cutting means comprises a knife (76) inserted between the two tapes (64, 66) at the side opposite to the slot (42) entrance so as to cut the two tapes when the jaws (38, 40) are moved together and engaged.

6. Weighing device according to one of the preceding claims, characterized in that the case (14) comprises a cover (16) for closing the access opening, the closing of the cover controlling the whole automatic bag weighing and sealing operations.

7. Weighing device according to any one of the preceding claims, characterized in that it comprises a detector (58) of the insertion of the bag (34) into the slot (42) which controls the closing of the jaws (38, 40) to clamp the neck of the bag.

**Patentansprüche**

1. Wägereinrichtung für die Oeffentlichkeit, insbesondere für offene Güter (34), die von dem Käufer in einen Sack (36) gelegt werden, welche aufweist: eine Haltevorrichtung (32) des Sackes (36) mit einem Spalt (42) zum Einführen durch den Käufer des Sackkragens (44), eine Waage (40) zum Tragen der zu wiegenden Güter, ein Sackschliessmittel (64, 66), um das Einfügen von weiteren Gütern in den Sack nach dem Wägen zu verhindern, und ein Druckmittel (98) der kommerziellen Daten, des Gewichts und des Preises der gewägten Güter, dadurch gekennzeichnet, dass die Haltevorrichtung (32) des Sackes (36) unter die Waage (10) gestellt und befestigt ist, dass die genannte Haltevorrichtung (32) ein den in dem genannten Spalt (12) eingefügten Sackkragen (44) klemmendes Klemmpaar (38, 40) aufweist, um den Sack (36) zu halten und an die genannte Waage (10) zu hängen, dass die genannten Klemmen (38, 40) ein Schliessmittel (64, 66) des Sackes, dessen Kragen (44) zwischen den Klemmen (38, 40) geklemmt ist, durch Schweissen und Befestigen eines Etiketts aufweist, und dass das Ganze in dem oberen Teil eines Raumes (14) mit einer schliessbaren Zugangsöffnung zum unteren Teil aufgestellt ist.

2. Wägeeinrichtung nach Anspruch 1, dadurch gekennzeichnet, dass das genannte Schliessmittel zwei Bänder (64, 66) aufweist, die je einer der Klemmen (38, 40) zugeordnet sind, und dass ein Zuführungsmittel (72) ein Band auf jeder Seite des Sackkragens (44) zwischen diesen Kragen und die zugeordnete offene Klemme einschiebt, sodass die Bänder (64, 66) aneinander und gegen den Sackkragen (44) beim Schliessen der Klemmen (38, 40) gedrückt werden, um den Sack zu schliessen und die Bänder (64, 66) an dem Kragen zu befestigen.

3. Wägeeinrichtung nach Anspruch 1 oder 2, dadurch gekennzeichnet, dass sie eine Druckvorrichtung (98) der Wägedaten aufweist, und dass das Drucken auf den Schliessbändern (64, 66) vor der Freigabe des Sackes durch die Haltevorrichtung (32) ausgeführt wird.

4. Wägeeinrichtung nach Anspruch 1, 2 oder 3, dadurch gekennzeichnet, dass die Schliessbänder (64, 66) auf Spulen (68, 70) gelagert sind, dass das Bandzuführungsmittel (72) an den Klemmbedienungsmechanismus (38, 40) gekuppelt ist, um die Schliessbänder automatisch zu versorgen, und dass eine Abschneidevorrichtung (76) die Bänder nach jeder Wägung abschneidet.

5. Wägeeinrichtung nach Anspruch 4, dadurch gekennzeichnet, dass die Abschneidevorrichtung (76) ein zwischen den zwei Bändern (64, 66) an der Gegenseite der Spaltöffnung (42) eingeschobenes Messer (76) aufweist, um die zwei Bänder bei der Schliess- und Klemmbewegung der Klemmen (38, 40) abzuschneiden.

6. Wägeeinrichtung nach einem der vorigen Ansprüche, dadurch gekennzeichnet, dass der Raum (14) einen Schliessdeckel (16) der Zugangsöffnung aufweist, deren Schliessen die voll automatischen Wägungs- und Schliessvorgänge des Sackes auslöst.

**7.** Wägeeinrichtung nach irgend einem der vorigen Ansprüche, dadurch gekennzeichnet, dass sie eine das Einführen des Sackes (34) in den Spalt (42) detektierenden Taster (58) aufweist, welcher das den Sackkragen klemmende Schliessen der Klemmen (38, 40) auslöst.

FIG 2

FIG 1

FIG 3

FIG 4

66.64

224                           224

FIG 5

64.66

NOIX CAJOU

224 10 04 87

$^{kg}$ $^{F/kg}$ $^{F}$
0,134   132,80        17,80   '224

22

FIG 6

FIG 7

FIG. 8

FIG. 9